(19) **Europäisches Patentamt / European Patent Office / Office européen des brevets**

(11) **EP 1 943 908 A1**

(12) **EUROPEAN PATENT APPLICATION**

(43) Date of publication:
**16.07.2008 Bulletin 2008/29**

(51) Int Cl.:
*A23L 1/0522* $^{(2006.01)}$     *A23L 1/30* $^{(2006.01)}$
*A23L 1/29* $^{(2006.01)}$     *C12P 19/04* $^{(2006.01)}$
*C08B 35/00* $^{(2006.01)}$

(21) Application number: **06077345.4**

(22) Date of filing: **29.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Nederlandse Organisatie voor toegepast-natuurwetenschappelijk Onderzoek TNO**
**2628 VK Delft (NL)**

(72) Inventors:
• **Van der Maarel, Marc Jos Elise Cornelis**
**9753 BV Haren (NL)**

• **Binnema, Doede Jacob**
**9721 TX Groningen (NL)**
• **Semeijn, Cindy**
**9722 WD Groningen (NL)**
• **Buwalda, Pieter Lykle**
**9718 MJ Groningen (NL)**

(74) Representative: **van Loon, C.J.J. et al**
**c/o VEREENIGDE**
**Johan de Wittlaan 7**
**2517 JR Den Haag (NL)**

(54) **Novel slowly digestible storage carbohydrate**

(57)     The present invention relates to slowly digestible storage carbohydrates (starch, glycogen) having a branching degree of at least 8.5%. Said slowly digestible carbohydrates can be produced by treating the substrate (glycogen, starch) from a native source with a glycogen branching enzyme derived from *Rhodothermus obamensis, Rhodothermus marinus, Deinococcus radiodurans* or *Deinococcus geothermalis*.

**EP 1 943 908 A1**

**Description**

FIELD OF THE INVENTION

The invention relates to the preparation of slowly digestible storage carbohydrates, more specifically to the production of slowly digestible starch or glycogen using glyocgen-branching enzymes.

BACKGROUND OF THE INVENTION

Starch, being a polymer of glucose, is one of the main sources of energy for the human body. During digestion, the glucose of the starch is transferred to the blood in the small intestine, leading to elevated glucose levels in the blood. As a reaction, the body produces higher levels of insulin to store the glucose as glycogen in the liver and muscles.

The digestion behaviour of starches in the small intestine is divided into three categories: rapidly digestible starch, slowly digestible starch and non-digestible starch (resistant starch). Rapidly and slowly digestible starch are distinguishable by the so-called Glycemic Response, i.e. the rate at which the glucose is released into the blood. Resistant starch is not digested in the small intestine, but fermented in the large intestine. A nice overview of the classification of starches is given by Englyst et *al.,* (Englyst H., Kingman S.M., Cummings J.H. (1992), "Classification and measurement of nutritionally important starch fractions", Eur. J. Clin. Nutr. 46:33-50).

Rapidly digestible starch releases glucose quickly into the blood. Several negative health aspects have been attributed to this quick release and the subsequent increase in insulin levels. Diets with a rapid glycemic response are related to the development of diabetes type II for some groups of the population (Salmeron et al., (1997) JAMA 277: 472-477). Furthermore, rapidly digestible starches have been connected to the development of obesity. The quick release of glucose and resulting quick increase in insulin leaves the person hungry and urging to reach for more food. As a consequence, recent recommendations by the FAO/WHO advocated the choice of starches with a slow response in persons with hyperlipidemia and obesity as well as in healthy persons, although the insulin response is an important factor as well.

For birds it has been suggested that slowly digestible starch improves the efficiency of digestion of protein and amino acids (Poultry world, October 2003).This could be important for mammals, especially humans, as well: an increase in the uptake of amino acids is thought to relieve underfeeding.

In sports drinks, the release of glucose is an important issue, although not directly related to health. Commercial information on a sports drink called PeptoPro® describes the application of protein hydrolysates to glucose polymers in order to increase the glycemic response. Such an increase would enhance recuperation between sportive efforts. However, in order to prepare for a sport requiring an effort over a prolonged period, a slow release of the glucose would be desired, to give the body more time to burn the glucose, and to prevent the undesired storage in muscle and liver.

Some starches naturally have an increased ratio of slowly digestible starch with respect to other starches. One such a starch is the starch from *Agrostis teff,* an Ethiopian grain, which forms the food of many Ethiopians and is therefore thought to contribute to the marathon performances of Ethiopian sportsmen (www.sporteff.nl).

Slowing down of the digestibility with increasing the degree of branching of the starch has been suggested in US 2003/0005922, although the products have been described before in EP-A-0 418 945. In US 2005/0159329 therefore an extra enzymatic β-amylase step was introduced in order to make a product with the desired properties. Other patent documents have also described the use of branching enzymes to change starch into a stable, non-gelling product with relatively low viscosity. However, none of these patent applications describe the use of the modified starch products as a slowly degradable, slowly digestible carbohydrate as such.

SUMMARY OF THE INVENTION

The invention relates to a novel, slowly digestible storage carbohydrate, having a degree of branching of at least 8.5-9%, preferably at least 10%, more preferably at least 11%. Said slowly digestible storage carbohydrate preferably has a molecular weight of about 60 to about 150 kD. Further said storage carbohydrate preferably can be hydrolysed by human or animal intestinal enzymes at a rate not greater than 0.9 times the rate at which maltose is hydrolysed under the same conditions, preferably between 0.1 and 0.9 times, more preferably between 0.3 and 0.7 times.

Also part of the invention is a method to produce a slowly digestible storage carbohydrate, having a degree of branching, i.e. the amount of alpha 1,6 glycosidic linkages, of at least 9%, preferably at least 10%, more preferably at least 11% and most preferably at least 12%, by treating storage carbohydrate from a native source with a branching enzyme. Said enzyme is preferably an enzyme with the activity described by E.C. 2.4.1.18, derived from a microorganism, preferably a microorganism from the *Rhodothermus* and/or the *Deinococcus* family or the *Deinococcus-Thermus* group, more preferably a micro-organism selected from the group consisting of *Rhodothermus obamensis, Rhodothermus marinus, Deinococcus radiodurans* or *Deinococcus geothermalis.*

Further in said method the native source is a storage carbohydrate-containing plant material, i.e. a starch containing plant material, preferably a root or tuber, more preferably a potato tuber.

Advantageously, said starch from a native source comprises at least 90% amylopectin.

Another embodiment of the invention is a slowly digestible storage carbohydrate prepared by a method as described above.

Further part of the invention is the use of such a slowly digestible storage carbohydrate as food or feed product, preferably for diabetic food, baby food, special dietary formulations and/or sport foods and drinks. Advantageously, the slowly digestible storage carbohydrate is added in amounts of at least 10% by weight to said food, feed or drink.

DESCRIPTION OF THE FIGURES

Fig. 1 Graph showing the side chain distribution (i.e. number of glucose residues in side chain) for starches obtained by treatment with enzymes from 5 different bacterial sources as compared to amylopectin starch from potato. "RH 9.6" is *Rhodothermus obamensis,* "Apec aard" is high amylopectine (amylose free) potato starch.

Fig. 2 shows a flowchart for the production of branched starch. For details, see below.

DETAILED DESCRIPTION

A branching enzyme, also called glycogen branching enzyme (encoded by the *glgB* gene) is present in micro-organisms and animals (including humans). It produces the $\alpha$-1,6-glycosidic binding in glycogen, thus forming branches from the normal $\alpha$-1,4-glycosidic bonded strain of glucose moieties, which make up the 'backbone' of the glycogen. A similar enzyme exists in plants, the starch branching enzyme, which performs the same function (formation of $\alpha$-1,6-glycoside binding in amylopectin, one of the two glucose polymers of starch). It has, however, appeared that glycogen branching enzymes are able to use starch as substrate for their enzymatic activities.

Starches suitable as substrate in this invention include all starches derived from any native source. A native starch as used herein is defined as a starch that is found in nature. Other suitable starches are derived from plants through cross-breeding, translocation, inversion, transformation or any other method of genetic or chromosome engineering to alter native starches. Next to starch, also glycogen can be used as substrate, and it appears that also glycogen can be converted by the enzymes of the invention into a slowly digestible glycogen. In this application both starch and glycogen will be indicated as "storage carbohydrates".

Typical sources of starch are cereals, tubers, roots and fruits of plants. These starches typically contain mixtures of amylose and amylopectin. Such sources can also be a so-called 'waxy' variant of the more common source, wherein 'waxy' means that the plant produces a starch containing less than 10% amylose; these starches are also designated 'amylopectin starches'. Waxy starches are preferred because they generally already contain a higher degree of branching (about 4%) than the non-waxy starches. However, also starches with a high content of amylose can profit from the invention, since it is contemplated that they will become more stable upon modification with a branching enzyme and the processing of these will be facilitated.

Typical sources of glycogen are muscle and liver (to a lesser extent also kidney and spleen) of various kind of animals, including mammals, while also micro-organisms such as bacteria, fungi and yeast can form a source of glycogen.

Amylopectin starch, because of its increased branching has a rate of *in vitro* digestion comparable to that of maltose (i.e. between 0.9-1.0 times the rate of digestion of maltose). Such digestion is measured according to the so-called Englyst method in a test tube analysis (Englyst, H.N. et al., 1992, Eur. J. Clin. Nutr. 46:33-50), or in an *in vitro* intestinal model system (TIM-1, Minekus, M. et al., 1995, Alt. Lab. Animals 23:197-209). The rate found for amylopectin was also reached by treating native starch with branching enzymes derived from the bacteria *Aquifex aeolicus* (Van der Maarel et al., 2003, Biocat. Biotransform. 21:199-207) and *Bacillus stearothermophilus* (Takata H. et al. 1994, Appl. Environ. Microbiol.60-3096-3104). Analysis of the starch resulting from treatment with the enzymes from these bacteria learnt that they had a branching degree of about 5-7%. Further, the size of the produced side chains in these molecules was relatively large (median DP - degree of polymerisation - about 9-15 glucose moieties per side chain).

It now appears that with a branching enzyme from another source, it is possible to obtain a degree of branching of more than 8.5%. This increased branching has beneficial effects on the digestibility of the storage carbohydrate, as is shown in the experimental part below. It further appears that the degree of polymerisation, i.e. the chain length of the side chains, has decreased to a median value of about 6-12 glucose moieties, while the starch produced by the enzyme of *Deinococcus radiodurans* has a median chain length of about 6-7 glucose moieties. This latter starch is also characterized not only by a very high degree of branching (11-12%), but also by a very low molecular weight of the starch molecule, in the order of about 60 kDa. The enzymes, which are particularly useful in the present invention are enzymes form the microorganisms belonging to the group of *Rhodothermus* and *Deinococcus* family or the *Deinococcus-Thermus*

group, more preferably a micro-organism selected from the group consisting of *Rhodothermus obamensis, Rhodothermus marinus, Deinococcus radiodurans* or *Deinococcus geothermalis.*

Furthermore, homologous enzymes of those mentioned above, which retain still the function of forming $\alpha$-1,6-glycosidic linkages, are encompassed.

Homologous in this sense means that a homologous enzyme has an amino acid sequence which has a sequence homology of more than 70%, preferably more than 80%, more preferably more than 90% and most preferably more than 95% with the above mentioned enzymes.

For calculation of percentage identity (or homology) the BLAST algorithm can be used (Altschul et al., 1997 Nucl. Acids Res. 25:3389-3402) using default parameters or, alternatively, the GAP algorithm (Needleman and Wunsch, 1970 J. Mol. Biol. 48:443-453), using default parameters, which both are included in the Wisconsin Genetics Software Package, Genetics Computer Group (GCG), 575 Science, Madison, Wisconsin, USA. BLAST searches assume that proteins can be modeled as random sequences. However, many real proteins comprise regions of nonrandom sequences which may be homopolymeric tracts, short-period repeats, or regions enriched in one or more amino acids. Such low-complexity regions may be aligned between unrelated proteins even though other regions of the protein are entirely dissimilar. A number of low-complexity filter programs can be employed to reduce such low-complexity alignments. For example, the SEG (Wooten and Federhen, 1993 Comput. Chem. 17:149-163) and XNU (Claverie and States, 1993 Comput. Chem. 17:191-201) low-complexity filters can be employed alone or in combination.

As used herein, 'sequence identity' or 'identity' or 'homology' in the context of two protein sequences (or nucleotide sequences) includes reference to the residues in the two sequences which are the same when aligned for maximum correspondence over a specified comparison window. When percentage of sequence identity is used in reference to proteins it is recognised that residue positions which are not identical often differ by conservative amino acid substitutions, where amino acids are substituted for other amino acid residues with similar chemical properties (e.g. charge or hydrophobicity) and therefore do not change the functional properties of the molecule. Where sequences differ in conservative substitutions, the percentage sequence identity may be adjusted upwards to correct for the conservative nature of the substitutions. Sequences, which differ by such conservative substitutions are said to have 'sequence similarity' or 'similarity'. Means for making these adjustments are well known to persons skilled in the art. Typically this involves scoring a conservative substitution as a partial rather than a full mismatch, thereby increasing the percentage sequence identity. Thus, for example, where an identical amino acid is given a score of 1 and a non-conservative substitution is give a score of zero, a conservative substitution is given a score between 0 and 1. The scoring of conservative substitutions is calculated, e.g. according to the algorithm of Meyers and Miller (Computer Applic. Biol. Sci. 4: 11-17, 1988).

Especially preferred are homologous enzymes as defined above, which have an increased thermostability, i.e. an increased resistance to high temperatures and/or an increased temperature optimum.

Branching enzymes that belong to the glycoside hydrolase family 13 (see http://afmb.cnrs-mrs.fr/CAZY/fam/GH13.html) posses four conserved regions in which a number of conserved residues important for catalysis are localized (see van der Maarel et al. 2002, J. Biotechnology 94: 137-155). Together with the glycoside hydrolase family 70 and 77, family GH13 forms the so-called alpha-amylase family of which all the enzymes share these conserved domains. It is known from several recent publications that modifications in these conserved domains and their direct vicinity can have dramatic impact on the enzymes activity, specificity and the glycosidic linkages formed in the products made by these enzymes. Leemhuis et al. (Biochemistry,2004, 43: 13204-13213) showed that when changing G 104 to H, which is present in the conserved region 1, in the acerviosyl transferase of Actinoplanes sp. SE50/110, the enzyme became a glucanotransferase like enzyme. This mutation also introduced a cyclodextrin forming activity. Another example is that mutations introduced into the reuteransucrase of Lactobacillus reuteri 121 in region 4 just next to the catalytic Asp changed this enzyme into a dextransucrase (the amount of 1,6 glycosidic linkages in the product made by the mutant was 85%, whereas the wild type enzyme produced a product with about 50% 1,6 glycosidic linkages) (Kralj. et al. Biochemistry 2005, 44, 9206-9216).

The enzymatic treatment with the branching enzyme is performed using techniques known to the artisan. The amount of enzyme used depends on the activity of the enzyme source, the starch source and process parameters such as pH and temperature. Typically between 50 and 400 U/g dry weight are employed. One unit (U) is defined as the amount of enzyme that decreases the absorbance at 660 nm of an amylose-iodide complex with 1% per minute. Regarding pH and temperature, the enzymes used in the prior art and in the present invention have a large variety of optimum values. For industrial applications of the enzymatic treatment of starch, it is preferable to use enzymes or their mutants that are active at temperatures above 60°C or higher, or which at least can survive relatively high temperatures. In general, mutations resulting in an increased temperature stability are those that increase the amount of interactions between amino acid residues that are in close vicinity (hydrogen bonds, van der Waals interactions, electrostatic interactions, hydrophobic interactions) or the specific introduction of one or two amino acids containing a sulphur side residue (such as cysteine) that form a sulphur bridge (see ao. J. Fitter, 2005. Structural and dynamical features contributing to thermostability in alpha-amylases, Cell Mol Life Sci, 62: 1925-1937; Kim YW et al., 2003, Directed evolution of Thermus maltogenic amylase toward enhanced thermal resistance. Appl. Environ. Microbiol. 69: 4866-4874).

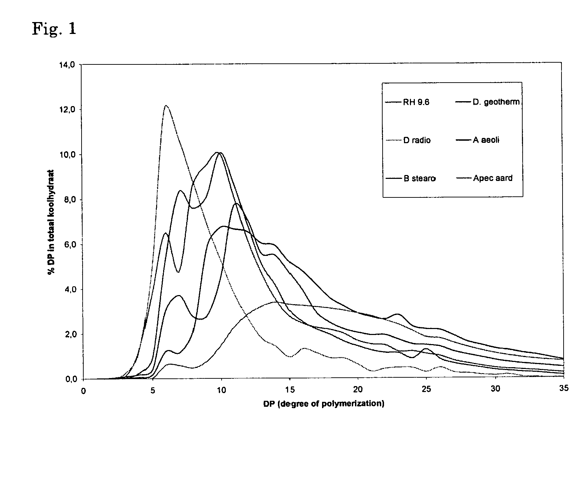

In Table 1 below the percentage branching, the molecular weight of the starch obtained and the optimum temperature for several of the branching enzymes is listed, while Fig. 1 shows the distribution curve of the degree of polymerisation of the side chains of starches treated by said branching enzymes.

TABLE I. degree of branching of different branched products compared to waxy and regular potato starch. The degree of branching was determined by either using isoamylase only or by a combination of isoamylase and pullulanase to hydrolyse the 1,6 glycosidic linkages. Note the increase in degree of branching of the *D. radiodurans* branched product when the isoamylase/pullulanase combination was used.

| Enzyme source | % branching (using only isoamylase) | % branching (using isoamylase/ pullulanase) | MW (kDa) | T opt (°C) |
|---|---|---|---|---|
| A. aeolicus | 6.3 | nd | 125 | 80 |
| B. stearothermophilus | 6.4 | nd | 146 | 55 |
| R. obamensis | 9.5 | 9.5 | 135 | 65 |
| D. geothermalis | 8.5 | 8.8 | 96 | 37* |
| D. radiodurans | 10 | 11.5 | 62 | 37* |
| Waxy potato starch | 3.9 | nd | | |
| Regular potato starch | 3.1 | 3.2 | | |
| Yeast | 4.5 | nd | 1000 | 37 |
| * active at 55°C nd = not determined | | | | |

The enzymatic treatment can be carried out with or without prior gelatinisation by heating of a starch slurry or by jet cooking. The method of using gelatinisation is known to the person skilled in the art, and is for instance described in J.L. Doublier. Rheological studies on starch. Flow behaviour of wheat starch pastes. Starch/Stärke, 33 (1981) 415-420; P. De Meuter, J. Amelrijckx, H. Rahier, B. Van Mele. Isothermal crystallization of concentrated amorphous starch systems measured by modulated differential scanning calorimetry. J. Polym. Sci.: Part B: Polym. Phys., 37 (1999) 2881-2891.

The gelatinisation solubilises the starch, thus rendering it more accessible for the enzyme. alternatively, the starch may be processed by the enzyme in an extruder process as described in C. Mercier, P. Feillet. Modification of carbohydrate components by extrusion-cooking of cereal products. Cereal Chem., 52 (1975) 283-297, in a heated low moisture powder as described in R.J. Nicholls, I.A.M. Appelqvist, A.P. Davies, S.J. Ingman, P.J. Lillford. Glass transition and the fracture behaviour of gluten and starches within the glassy state. J. Cereal Sci., 21 (1995) 25-36 or by drum drying (P. Colonna, J.L. Doublier, J.P. Melcion, F. de Monredon, C. Mercier. Extrusion cooking and drum drying of wheat starch. I. Physical and macromolecular modifications. Cereal Chem., 61 (1984) 538-543). Preferably, the enzymatic conversion is performed at a condition in which the maximum dry solids contest is possible. Typical temperatures for the conversion are between 10 and 90°C, more particular between 50 and 80°C. In general, the pH at which the reaction is carried out is adjusted between 3.0 and 6.0. The conversions follow an asymptotic time curve and the reaction can have a long duration before essentially all of the starch is converted. However, for an efficient conversion, reaction times of about 1 to 36 hours, more preferably 2-24 hours are sufficient. Optionally, the enzyme used in the conversion can be deactivated after the conversion is completed by techniques known in the field, such as lowering the pH to below pH 3.0 or increasing the temperature by e.g. jet cooking.

After conversion and optionally deactivation of the enzyme, the starch is isolated by extrusion or spray drying, flash drying, air drying, freeze drying, vacuum drying, belt drying, drum drying, or any other method known and used in the art for drying starch. Preferably, the starch is isolated by spray drying. The extent of conversion is typically quantified by dextrose equivalent (DE), which is roughly the fraction of the glycoside bonds in starch that have been broken. Food products made in this way include

- Maltodextrin, a lightly hydrolyzed (DE 10-20) starch product used as a bland-tasting filler and thickener.
- Various corn syrups (DE 30-70), viscous solutions used as sweeteners and thickeners in many kinds of processed foods.

- Dextrose (DE 100), commercial glucose, prepared by the complete hydrolysis of starch.
- High fructose syrup, made by treating dextrose solutions to the enzyme glucose isomerase, until a substantial fraction of the glucose has been converted to fructose. In the United States, high fructose corn syrup is the principal sweetener used in sweetened beverages because fructose tastes sweeter than glucose, and less sweetener may be used.

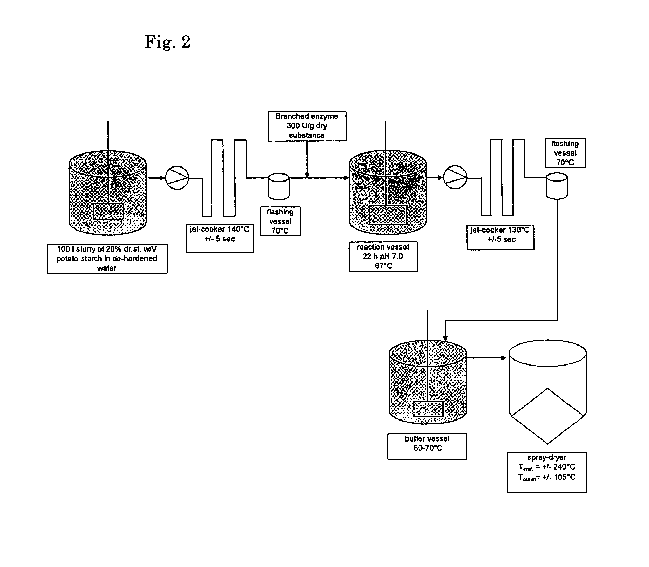

The resultant starch is characterised by a DE lower than 3. A flow chart for a typical process scheme for the enzymatic treatment of starch can be found in Fig. 2. Start is formed by a slurry of approximately 20% dry weight starch (preferably potato starch in de-hardened water, which is passed through a jet-cooker (140°C for 5 sec). Then enzyme is added and the reaction is performed for a sufficient time at appropriate conditions (pH, temperature). Elevated temperatures (e.g. between 50°C and 70°C) are preferred, because this inhibits microbial contaminants to start growing. After reaction, the modified starch solution is passed through a jet cooker (130°C for 5 sec) to inactivate the enzyme and the material is collected in a buffer vessel. Finally, the modified starch is spray-dried.

The produced modified starches can be ideally applied as slow digestible starch in food and feed applications. Nowadays, starch is used in a multitude of applications in food and feed, e.g. as basic food compound, as binder, filler, viscosifyer or gelling agent for the production of bakery products (breads, cakes, cookies, snacks, candy-bars, etc.), for the production of dairy products (creams, pudding, etc.), soups and sauces.

A further advantage is the decreased viscosity and gel-forming properties of the highly branched storage carbohydrates. In the processes of preparing the above mentioned food and feed products, but also in non-food processes in which starch is used, such as the textile industry (for strengthening the yarn during spinning), the paper manufacturing industry, and for coating of paper, in which processes often heating and cooling of intermediary products, inclusive the applied starches, is used, the amylase molecules and the long side-chains of the amylopectin molecules of the starches of the prior art are known to interact, thereby forming irreversible gels. This property of the starches of the prior art results in a decreased applicability in such processes. The highly branched storage carbohydrates of the present invention do not or only minimally show these interactions, which thus will result in less formation of irreversible gels, and thus in an increase applicability of these starches in the above mentioned processes.

EXAMPLES

The gene sequences and their corresponding amino acid sequences of the enzymes described in this patent application can be found in the National Centre for Biotechnology Information (NCBI) protein database (http://www.ncbi.nlm.nih.gov/entrez/query.fcgi?CMD=search&DB=protein). The amino acid sequences have the following accession numbers:

R. obamensis: NCBI accession number Q93HU3
D. geothermalis: NCBI accession number ABF45281 (Q1IZQ3)
D. radiodurans NCBI accession number AE000513 (Q9RTB7)
B. stearothermophilus NCBI accession number AAA22482 (P30538).

A person skilled in the art can, on basis of the above given sequence information, obtain the DNA coding for the enzymes and use this DNA in heterologous expression systems. It is also possible to isolate the enzymes from cultures of the above mentioned micro-organisms.

The cloning of the *A. aeolicus* gene has been described in van der Maarel et al. Biocatalysis and Biotransformation 2003, 21:199-207.

## Example 1

## Production of modified starch

From regular food-grade potato starch and waxy potato starch maximally branched products were made by incubating 400U of branching enzyme activity per gram of starch for 20h at 68°C. A starch slurry was prepared by suspending the starch in demineralized water containing 0.2883 g CaCl$_2$· 2 H$_2$O per 1 and heating it in a water bath of 100°C for 20 minutes while stirring; subsequently the starch solution was autoclaved for 20 minutes at 121°C. Branching enzyme was added after the substrate was cooled down to the desired incubation temperature. After 20h, the reaction was stopped by heating the incubation mixture to 100°C. Subsequently, the branched glucans were harvested by ethanol precipitation and subsequent drying. Ethanol was added to a final concentration of 90% and then the ethanol/starch suspension was gently mixed for 50 min. The modified starch was then filtered over a paper filter. The material retained on the filter was washed with 100% ethanol and subsequently suspended in 100% ethanol. Then the starch was again filtered and dried at 37°C.

The branched glucan obtained with the *A. aeolicus* enzyme had on average a degree of branching of 5.3%, while the product obtained with the *R. obamensis* enzyme had a degree of branching of 9.5%.

**Analysis of the enzyme activity**

The amount of branching enzyme activity was determined by measuring the change in the absorbance at 640 nm of a iodine/iodide/amylose complex due to the action of the branching enzyme. The procedure was as follows:

Incubate 150 $\mu$l of a 0.125% amylose solution (Sigma A0512, type III, potato) with 50 $\mu$l of enzyme in an appropriate dilution (10-15U/ml) for 15 min at the appropriate temperature *(A. aeolicus* 80°C, *R. obamensis* 60°C). As a reference amylose solution without enzyme added was used. Cool the sample briefly (1 to 3 sec) on ice and after vortexing place them at room temperature. Take 15 $\mu$l sample and mix this with 150 $\mu$l iodine solution (1 g KI, 0.1 g $I_2$ en 940 g $CaCl_2$ per liter) in a pvc microtiterplate (ICN). After 5 to 10 min. measure the extinction at 640 nm. From the decrease in absorbance the enzyme's activity is calculated by the following formula:

$$act. = \frac{\Delta A_{bep}}{A_{amylose}/100} \times \frac{1}{t_{min}} \times \frac{V_{tot}}{V_{enz}} \times VF$$

act = activity in U / ml enzym
A=absorption / extinction
$\Delta Abep = A_{amylose} - A_{bep}$
V = volume (ml)
$V_{tot} = V_{enz} + V_{substr}$
VF = enzymedilutionfactor

**Analysis of the degree of branching**

The degree of branching was analysed by debranching with the enzyme isoamylase and subsequently measuring the amount of reducing ends formed. The analysis was done as follows: 100 mg of sample was mixed with 10 ml demineralized water and this was then heated in a stove at 100°C for 1 hour while mixing by rotation. After cooling it down to 35°C and waiting for 15 min. the pH was adjusted to 4.5 using 1M acetic acid. Then 0.875 U isoamylase solution (Megazyme, Wicklow, Ireland) was added followed by incubation for 20h at 35°C. The reaction was stopped by boiling the reaction mixture for 2 min and the sample was centrifuged for 30 min. at 3600 rpm (MSE centrifuge). The amount of reducing sugars in the supernatant was determined using the Nelson-Somogyi assay (G. Spiro: Analysis of sugars found in glycoproteins, in Methods Enzymol. 8 (Ed. E. F. Neufeld, V. Ginsburg) Academic Press, 1966).

**Side chain composition**

The side chain composition of the branched glucans was determined by debranching using isoamylase and subsequently analysis the oligosaccharides with HPLC.

Branched glucans were debranched by adding the microbial debranching enzyme isoamylase. The pH of the sample to be analysed was adjusted to 4.5 using 1M acetic acid, 0.875 U isoamylase solution (Megazyme) was added followed by incubation for 1h at 40°C. The reaction was stopped by boiling the reaction mixture for 2 min. Before HPLC analysis, samples were diluted fivefold in 80% DMSO, heated for 120 min at 90°C while mixing by rotation to obtain a clear solution and subsequently filtered through a 0.45 $\mu$m Millex filter (Millipore, Billerica, MA, USA). Then linear oligosaccharides were analysed by high-performance anion-exchange chromatography with pulsed amperometric detection (HPAEC-PAD; Dionex, Sunnyvale, CA, USA) equipped with a equipped with a 20 $\mu$l injection loop, a CarboPac Pa-1 guard column and a Pa-1 column, a quaternary gradient pump, an eluent degas module using helium gas, and a pulsed amperometric detector with a gold electrode. The potential of the electrode was programmed as follows: 0.1V from 0 to 0.4s, then 0.7V from 0.41 to 0.61s and finally -0.1V from 0.61 to 1.00 s; the signal was integrated from 0.2 to 0.4s.

**Englyst assay.**

With the Englyst analysis method (Englyst, H. N., Kingman, S. M., and J. H. Cummings. 1992. Classification and measurement of nutritionally important starch fractions. Eur. J. Clin. Nutr. 46: 33-50), the amount of rapidly and slowly degradable starch can be assessed. The human stomach and small intestine are mimicked in test tubes by incubating the s sample with a mixture of pancreatin, invertase and amyloglucosidase and measuring the amount of product converted after 20 minutes (rapidly degradable starch; RDS) and 120 minutes (slowly degradable starch; SDS). Also the total amount starch (TG) was measured as the amount of glucose obtained with α-amylase and AMG. The amount of resistant starch is calculated from the difference between the total amount of starch and the amount of starch degraded. In the case of highly branched glucans, the use of amyloglucosidase (hydrolyzing branching points) could have an unwanted effect on the analysis. Therefore, the Englyst method was modified slightly: amyloglucosidase and invertase were omitted from the incubation mixture and the analysis of the amount of starch that was converted was changed. The amount of starch that had been converted was defined as the total amount of maltooliogosaccharides up to maltopentaose produced. A second variation on the Englyst method used was one in which a lower dosage of pancreatin and more sampling were used. All samples were analysed for glucose with the GOPOD method, by cation exchange HPLC (no branched products detected), and by HPAEC-PAD (linear and branched products detected).

*Analysis*

Samples were prepared "as eaten". This was done by adding 5 ml water to 0.6 gram of starch, heating this at 100°C for 10 min. and cooling it to 37°C. To this 10 ml of an arabinose/pepsin/guar solution (a solution of 20g/L arabinose in 25% saturated benzoic acid with 0.05 M sodium chloride to which 5 g/L pepsin [Sigma no P-7000] and guar gom [Sigma no G-4129] was added) was added and this solution was incubated for 30 min. at 37°C. After 5 ml sodium acetate (0.5 M) and 5 glass marbles were added, the complete suspension was gently mixed en put at 37°C to equilibrate. Then 5 ml enzyme solution (3 gram pancreatin [Sigma npo P-7545] in 120 ml altra pure water, mixing well and centrifugation at 1500 x g, then to 90 ml of the supernatant 4 ml amyloglucosidase [AMG 400L type LP of Novozymes] and 6 ml invertase [Merck no 390203D] was added) was added to the suspension in the tube, which were then placed horizontally in a shaking water bath at 37°C while mixing at 100 rpm. Every 20 min. a sample of 0.2 ml was taken from each tube and this was added to 4 ml ethanol absolute. At the end of the incubation, the tubes were mixed thoroughly to disintegrate all particles and then they were placed in a water bath with boiling water for 30 min. After a short mixing the tubes were placed on ice water for 15 min. To the tubes 10 ml potassium hydroxide (7M) was added and this solution was then incubated for 30 min in ice water while mixing at 100 rpm.

0.2 ml sample was withdrawn from each tube and 1 ml acetic acid (1M) and 40 μl amyloglucosidase solution (1:7 diluted AMG400L type LP of Novozymes) were added. This was incubated for 30 min at 70°C and then placed in boiling water for 10 min. Then these tubes were cooled in ice water to room temperature and 12 ml ethanol absolute was added to each tube. The amount of glucose in this latter samples represents the total amount of glucose left after the enzymatic incubation as described above.

The amount of glucose in each sample was determined as follows: the sample was first centrifuged for 5 min at 1500 x g and the amount of glucose was determined in the supernatant using the GOPOD assay (Megazyme, K-Gluc) according top the manufacturer's instructions with glucose as a standard.

**Results**

**Branched products**

The branched glucan products made with the *R. obamensis* and the *A. aeolicus* enzyme had a degree of branching of respectively 9 to 9.5% and 5.3 to 5.5%. The side chain distribution of these branched glucans showed small differences in the range of up to DP30. The *R. obamensis* product had more of the shorter side chains than the *A. aeolicus* product (see Figure 1).

**Digestibility**

A detailed Englyst analysis was done on the *A. aeolicus* product (5.3% branched) and the *R. obamensis* product (9.5% branched). Over a time period of 120 min every 20 min a sample was taken and the amount of free glucose was determined. The results are shown in Table 2. These results show that about 90% of the *R. obamensis* product used as a 10% dry solid suspension was converted into glucose within the first 20 min. The *A. aeolicus* product was degraded somewhat faster (95% within the first 20 min). After 40 min both products were almost completely degraded. Maltose was completely converted to glucose within the first 20 min. A waxy potato starch sample was converted for 96% within the first 20 min. and was completely degraded after 40 min. When the *R. obamensis* product was used as a 50% dry solid solution only 67% was degraded within the first 20 min. After 120 min this product was also completely degraded.

As can be seen from Table 3, 80% of the *R. obamensis* product that was degraded was recovered as short oligosaccharides. For the *A. aeolicus* product and waxy potato starch, about 90% of the degraded material was recovered as short oligosaccharides. Only 80% of the *R. obamensis* material converted could be recovered as oligosaccharides up to DP5, while for the *A. aeolicus* product and the waxy potato starch 94 to 97% could be recovered. These results indicate that a relatively high degree of branching is required to obtain a slower degradation. Based on these observations, a preliminary conclusion is that a degree of branching of more than 9% is needed to give a slower degradability.

Table 2. Results of the standard Englyst analysis of different types of branched glucans and a number of reference products with the amount of free glucose produced in time.

| Product | % of starch converted into glucose by Englyst | | | | | |
|---|---|---|---|---|---|---|
| | 20 min | 40 min | 60 min | 80 min | 100 min | 120 min |
| Goldstar wheat flour | 37 | 58 | 74 | 84 | 92 | 96 |
| Food grade potato starch | 2 | 5 | 7 | 10 | 14 | 16 |
| 9.5% branched glucan (10%) | 89 | 98 | 99 | 99 | 100 | 101 |
| 9.5% branched glucan (50%) | 67 | | | | | 102 |
| 5.3% branched glucan (10%) | 96 | 101 | 100 | 101 | 101 | 102 |
| Waxy potato starch | 96 | 101 | 102 | 100 | 101 | 103 |
| Paselli SA2 | 98 | 102 | 101 | 100 | 101 | 102 |
| Maltose | 100 | 102 | 101 | 101 | 101 | 102 |

Table 3. Results of the in vitro digestion of branched products produced with different microbial branching enzymes compared to a reference product (Paselli SA2). The in vitro assay was based on the method described by Englyst et al. (*supra*) while varying of the amount of enzyme cocktail that was added. The amount of small oligosaccharides formed in time (DP 1-3) was measured using the Dionex HPLC method as described for the side chain composition.

| Substrate | Dilution of enzyme | time (min) | Max. Englyst result (%) | Formation DP1-3 (% of TK) | composition DP 1-3 (sum=100%) | | | % DP1-3 of maximum (120 min not diluted) |
|---|---|---|---|---|---|---|---|---|
| | | | | | glucose | DP2 | DP3 | |
| D. radiodurans | 20x diluted | 20 | | 39,9 | 9 | 36 | 54 | 89 |
| | idem | 60 | | 41,4 | 13 | 40 | 48 | 92 |
| | idem | 120 | | 41,9 | 14 | 40 | 46 | 93 |
| | 5x diluted | 120 | | 42,3 | 32 | 47 | 21 | 94 |
| | not diluted | 120 | >90 | 45,1 | 74 | 25 | 1 | 100 |
| A. aeolicus | 20x diluted | 20 | | 63,0 | 8 | 43 | 49 | 103 |
| | idem | 60 | | 66,6 | 10 | 44 | 47 | 109 |
| | idem | 120 | | 62,7 | 10 | 44 | 45 | 103 |

(continued)

| | | (%) | | | | | (120 min not diluted) |
|---|---|---|---|---|---|---|---|
| | 5x diluted not | 120 | | 64,5 | 19 | 47 | 33 | 106 |
| | diluted | 120 | >95 | 61,0 | 63 | 33 | 3 | 100 |
| R. obamensis | 20x diluted | 20 | | 55,4 | 9 | 39 | 51 | 90 |
| | idem | 60 | | 56,9 | 13 | 42 | 45 | 93 |
| | idem | 120 | | 55,0 | 15 | 42 | 43 | 90 |
| | 5x diluted not | 120 | | 58,4 | 29 | 46 | 24 | 95 |
| | diluted | 120 | >95 | 61,3 | 68 | 30 | 2 | 100 |
| Paselli SA2 | 20x diluted | 20 | | 79,2 | 7 | 48 | 45 | 101 |
| | idem | 60 | | 81,4 | 9 | 47 | 44 | 104 |
| | idem | 120 | | 82,3 | 9 | 48 | 43 | 105 |
| | 5x diluted not | 120 | | 80,9 | 16 | 50 | 34 | 103 |
| | diluted | 120 | 100 | 78,4 | 57 | 39 | 5 | 100 |

Table 4. %branching detected in various starches with different assays.

| Source | % branching | | |
|---|---|---|---|
| | isoamylase assay 1 | isoamylase assay 2 | isoamylase + pullulanase |
| Standard 40389 | 3.1 | 3.1 | 3.2 |
| R. obamensis | 9.5 | 9.4 | 9.5 |
| D. geotherm. | 8.5 | 8.4 | 8.8 |
| D. radiod. | 10.1 | 9.9 | 11.5 |
| A. aeoli. | 6.3 | | |
| B. stearo | 6.4 | | |
| A. niger | 4.1 | | |
| Yeast | 4.5 | | |
| Amylopectine potato | 3.9 | | |
| Stand.: a common, regular potato starch obtained from AVEBE with batch number 40389. | | | |

**Claims**

1. Slowly digestible storage carbohydrate, having a degree of branching of at least 8.5-9%, preferably at least 10%, more preferably at least 11%.

2. Slowly digestible storage carbohydrate according to claim 1, **characterised in that** it has a molecular weight of about 60 to about 150 kD.

3. Slowly digestible storage carbohydrate according to claim 1 or 2, wherein said storage carbohydrate can be hydrolysed by human or animal intestinal enzymes at a rate not greater than 0.9 times the rate at which maltose is hydrolysed under the same conditions, preferably between 0.1 and 0.9 times, more preferably between 0.3 and 0.7 times.

4. Method to produce a slowly digestible storage carbohydrate, having a degree of branching of at least 9%, preferably at least 10%, more preferably at least 11%, by treating storage carbohydrate from a native source with a branching enzyme.

5. Method according to claim 4, wherein said branching enzyme is an enzyme, preferably an enzyme with the activity described by E.C. 2.4.1.18, derived from a micro-organism, preferably a micro-organism from the *Rhodothermus* and/or *Deinococcus* family or the *Deinococcus-Thermus* group or any homologous or mutant enzyme thereof, more preferably a microorganism selected from the group consisting of *Rhodothermus obamensis, Rhodothermus marinus, Deinococcus radiodurans* or *Deinococcus geothermalis,* or any homologous or mutant enzyme thereof, most preferably to the or derived of the *Deinococcus radiodurans* or *Rhodothermus obamensis.*

6. Method according to claim 4 or 5, wherein the native source is a starch-containing plant material, preferably a root or tuber, more preferably a potato tuber.

7. Method according to any of claims 3-5, wherein said storage carbohydrate from a native source comprises at least 90% amylopectin.

8. Slowly digestible storage carbohydrate prepared by a method according to any of claims 4-7.

9. Use of a slowly digestible storage carbohydrate according to claims 1-3 or claim 8 as food or feed product, preferably for diabetic food, baby food, special dietary formulations and/or sport foods and drinks.

10. Use according to claim 9, **characterized in that** the slowly digestible storage carbohydrate is added in amounts of at least 10% by weight to said food, feed or drink.

11. Use of an glycogen branching enzyme derived from a micro-organism, selected from the group consisting of the *Rhodothermus* and/or *Deinococcus* family or the Deinococcus-Thermus group, more preferably a micro-organism selected from the group consisting of *Rhodothermus obamensis, Rhodothermus marircus, Deinococcus radiodurans* or *Deinococcus geothermalis,* or any homologous or mutant enzyme thereof, for producing a slowly digestible storage carbohydrate.

Fig. 1

Fig. 2

**European Patent Office**

## EUROPEAN SEARCH REPORT

Application Number

EP 06 07 7345

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/014961 A1 (BACKER DANIEL [FR] ET AL) 22 January 2004 (2004-01-22) * paragraphs [0074] - [0084], [0092], [0093], [0096] - [0099], [0102] - [0109], [0117] - [0139]; claims; examples 1-3; tables 1-6 * ----- | 1-10 | INV. A23L1/0522 A23L1/30 A23L1/29 C12P19/04 C08B35/00 |
| X | US 2002/065410 A1 (ANTRIM RICHARD L [US]) 30 May 2002 (2002-05-30) * paragraphs [0009] - [0012], [0015] * ----- | 1-6,8,9 | |
| X | WO 00/22140 A (PLANTTEC BIOTECHNOLOGIE GMBH F [DE]; MAX PLANCK GESELLSCHAFT [DE]; BUE) 20 April 2000 (2000-04-20) * page 25, line 16 - line 25 * * page 33, paragraph 3 * * page 35, last paragraph - page 36, paragraph 1 * * page 40, line 6 - page 42, line 5 * ----- | 1-3,9 | |
| X | DE 102 37 442 A1 (FRESENIUS KABI DE GMBH [DE]) 11 March 2004 (2004-03-11) * paragraphs [0010], [0015] * ----- | 1,3 | TECHNICAL FIELDS SEARCHED (IPC) A23L C12P C08B |
| X | DATABASE WPI Week 200126 Derwent Publications Ltd., London, GB; AN 2001-248575 XP002445144 & JP 2001 031574 A (SANSHO KAKO KK) 6 February 2001 (2001-02-06) * abstract * ----- | 1,3,9,10 | |
| X | WO 03/106502 A (NOVOZYMES AS [DK]; TAKEDA YASUHITO [JP]; HANASHIRO ISAO [JP]; IHARA MI) 24 December 2003 (2003-12-24) * page 2, line 13 - line 18; claims * ----- | 11 | |
| | -/-- | | |

The present search report has been drawn up for all claims

| Place of search | Date of completion of the search | Examiner |
|---|---|---|
| Munich | 1 August 2007 | Baminger, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 06 07 7345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHINOHARA MARI L ET AL: "A novel thermostable branching enzyme from an extremely thermophilic bacterial species, Rhodothermus obamensis" APPLIED MICROBIOLOGY AND BIOTECHNOLOGY, vol. 57, no. 5-6, December 2001 (2001-12), pages 653-659, XP002443282 ISSN: 0175-7598 * column 2, last paragraph - page 658, column 1, paragraph 1 * | 4-6,11 | |
| Y | US 5 929 052 A (BRYNOLF MIKAEL [SE] ET AL) 27 July 1999 (1999-07-27) * column 1, line 3 - column 2, line 14; claim 1 * * column 2, line 36 - column 4, line 45 * | 1-3,9,10 | |
| Y | WO 2004/066955 A (PURDUE RESEARCH FOUNDATION [US]; HAMAKER BRUCE R [US]; HAN XIAN-ZHONG) 12 August 2004 (2004-08-12) * page 10, line 1 - page 12, line 18 * * page 14, last paragraph - page 15, line 2 * * page 20, line 11 - page 21, paragraph 2; claims * | 9,10 | TECHNICAL FIELDS SEARCHED (IPC) |
| Y | FR 2 783 838 A1 (ROQUETTE FRERES [FR]) 31 March 2000 (2000-03-31) * example 4 * | 1-11 | |
| Y | FR 2 792 941 A1 (ROQUETTE FRERES [FR]) 3 November 2000 (2000-11-03) * page 7, line 21 - page 8, line 21; claims * * page 15, line 1 - line 9; example 1 * | 1-11 | |

-/--

The present search report has been drawn up for all claims

| Place of search | Date of completion of the search | Examiner |
|---|---|---|
| Munich | 1 August 2007 | Baminger, Ursula |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 07 7345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | EP 0 418 945 A1 (AVEBE COOP VERKOOP PROD [NL]) 27 March 1991 (1991-03-27) * claims 6-9 * | 1-11 | |
| A | WO 03/018639 A (SUPRAMOL PARENTERAL COLLOIDS G [DE]; SOMMERMEYER KLAUS [DE]) 6 March 2003 (2003-03-06) * page 4, paragraph 3 - page 7, paragraph 2 * * page 8, line 4 - line 26 * | | |
| Y | EP 1 362 919 A (NAT STARCH CHEM INVEST [US]) 19 November 2003 (2003-11-19) * paragraphs [0014], [0034] - [0039]; claims * | 9,10 | |
| T | SPORTEFF: "Langdurige Energie"[Online] XP002443283 Retrieved from the Internet: URL:http://www.sporteff.nl/langdurige_energie.php> [retrieved on 2007-07-16] * the whole document * | | |
| T | SPORTEFF: "De voordelen van teff"[Online] XP002443284 Retrieved from the Internet: URL:http://www.sporteff.nl/voordelen_van_teff.php> [retrieved on 2007-07-16] * the whole document * | | |
| T | SOIL AND CROP IMPROVEMENT BV: "Eragrain Teff"[Online] XP002443285 Retrieved from the Internet: URL:http://www.soilandcrop.com> [retrieved on 2007-07-16] * the whole document * | | |

TECHNICAL FIELDS SEARCHED (IPC)

The present search report has been drawn up for all claims

| Place of search | Date of completion of the search | Examiner |
|---|---|---|
| Munich | 1 August 2007 | Baminger, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 07 7345

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2007

| Patent document cited in search report | | Publication date | Patent family member(s) | | Publication date |
|---|---|---|---|---|---|
| US 2004014961 | A1 | 22-01-2004 | AT | 335767 T | 15-09-2006 |
| | | | CA | 2430557 A1 | 06-12-2003 |
| | | | CN | 1468867 A | 21-01-2004 |
| | | | DK | 1369432 T3 | 11-12-2006 |
| | | | EP | 1369432 A2 | 10-12-2003 |
| | | | FR | 2840612 A1 | 12-12-2003 |
| | | | JP | 2004161998 A | 10-06-2004 |
| US 2002065410 | A1 | 30-05-2002 | US | 2003005922 A1 | 09-01-2003 |
| WO 0022140 | A | 20-04-2000 | AU | 765131 B2 | 11-09-2003 |
| | | | AU | 6469799 A | 01-05-2000 |
| | | | BR | 9915026 A | 17-07-2001 |
| | | | CA | 2345904 A1 | 20-04-2000 |
| | | | CN | 1325449 A | 05-12-2001 |
| | | | CZ | 20011125 A3 | 17-10-2001 |
| | | | EP | 1117802 A1 | 25-07-2001 |
| | | | HU | 0104892 A2 | 28-03-2002 |
| | | | JP | 2002527068 T | 27-08-2002 |
| | | | PL | 347223 A1 | 25-03-2002 |
| | | | US | 6699694 B1 | 02-03-2004 |
| DE 10237442 | A1 | 11-03-2004 | AU | 2003251668 A1 | 29-03-2004 |
| | | | CN | 1675248 A | 28-09-2005 |
| | | | WO | 2004022602 A1 | 18-03-2004 |
| | | | EP | 1530593 A1 | 18-05-2005 |
| | | | JP | 2005539107 T | 22-12-2005 |
| | | | US | 2006032400 A1 | 16-02-2006 |
| JP 2001031574 | A | 06-02-2001 | NONE | | |
| WO 03106502 | A | 24-12-2003 | AU | 2003232182 A1 | 31-12-2003 |
| US 5929052 | A | 27-07-1999 | AT | 201882 T | 15-06-2001 |
| | | | AU | 683157 B2 | 30-10-1997 |
| | | | AU | 1829195 A | 04-09-1995 |
| | | | CN | 1142232 A | 05-02-1997 |
| | | | DE | 69521200 D1 | 12-07-2001 |
| | | | DE | 69521200 T2 | 22-11-2001 |
| | | | DE | 745096 T1 | 05-06-1997 |
| | | | EP | 0745096 A1 | 04-12-1996 |
| | | | ES | 2159627 T3 | 16-10-2001 |
| | | | JP | 9511266 T | 11-11-1997 |
| | | | RU | 2123011 C1 | 10-12-1998 |
| | | | SE | 503134 C2 | 01-04-1996 |
| | | | SE | 9400524 A | 17-08-1995 |

EPO FORM P0459

**EP 1 943 908 A1**

## ANNEX TO THE EUROPEAN SEARCH REPORT
## ON EUROPEAN PATENT APPLICATION NO.

EP 06 07 7345

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2007

| Patent document cited in search report | | Publication date | Patent family member(s) | | Publication date |
|---|---|---|---|---|---|
| US 5929052 | A | | WO 9522562 A1 | | 24-08-1995 |
| WO 2004066955 | A | 12-08-2004 | CA 2514551 A1 | | 12-08-2004 |
| | | | EP 1596843 A2 | | 23-11-2005 |
| FR 2783838 | A1 | 31-03-2000 | AU 5632099 A | | 17-04-2000 |
| | | | CA 2345331 A1 | | 06-04-2000 |
| | | | EP 1115843 A1 | | 18-07-2001 |
| | | | WO 0018893 A1 | | 06-04-2000 |
| FR 2792941 | A1 | 03-11-2000 | AT 274525 T | | 15-09-2004 |
| | | | AU 777378 B2 | | 14-10-2004 |
| | | | AU 4305200 A | | 17-11-2000 |
| | | | CA 2371185 A1 | | 09-11-2000 |
| | | | CN 1349544 A | | 15-05-2002 |
| | | | DE 60013271 D1 | | 30-09-2004 |
| | | | DE 60013271 T2 | | 15-09-2005 |
| | | | EP 1177216 A1 | | 06-02-2002 |
| | | | ES 2226821 T3 | | 01-04-2005 |
| | | | WO 0066633 A1 | | 09-11-2000 |
| | | | JP 2002543248 T | | 17-12-2002 |
| | | | MX PA01011078 A | | 22-07-2002 |
| | | | NO 20015224 A | | 25-10-2001 |
| | | | PT 1177216 T | | 31-01-2005 |
| EP 0418945 | A1 | 27-03-1991 | AT 113982 T | | 15-11-1994 |
| | | | DE 69014046 D1 | | 15-12-1994 |
| | | | DE 69014046 T2 | | 23-03-1995 |
| | | | DK 418945 T3 | | 05-12-1994 |
| | | | NL 8902128 A | | 18-03-1991 |
| WO 03018639 | A | 06-03-2003 | AT 360651 T | | 15-05-2007 |
| | | | CA 2456507 A1 | | 06-03-2003 |
| | | | CN 1545522 A | | 10-11-2004 |
| | | | DE 10235954 A1 | | 06-03-2003 |
| | | | EP 1421120 A1 | | 26-05-2004 |
| | | | HU 0401188 A2 | | 28-09-2004 |
| | | | JP 2005501930 T | | 20-01-2005 |
| | | | MX PA04001606 A | | 07-03-2005 |
| | | | US 2004157207 A1 | | 12-08-2004 |
| EP 1362919 | A | 19-11-2003 | AU 2003204158 A1 | | 04-12-2003 |
| | | | BR 0302597 A | | 12-04-2005 |
| | | | CA 2428516 A1 | | 14-11-2003 |
| | | | CN 1457670 A | | 26-11-2003 |

EPO FORM P0459

For more details about this annex : see Official Journal of the European Patent Office, No. 12/82

18

## ANNEX TO THE EUROPEAN SEARCH REPORT
## ON EUROPEAN PATENT APPLICATION NO.

EP 06 07 7345

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2007

| Patent document cited in search report | Publication date | Patent family member(s) | | Publication date |
|---|---|---|---|---|
| | | JP | 2004131682 A | 30-04-2004 |
| EP 1362919 A | | MX | PA03004176 A | 29-10-2004 |
| | | NZ | 525810 A | 29-10-2004 |
| | | US | 2003215562 A1 | 20-11-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030005922 A
- EP 0418945 A

- US 20050159329 A

**Non-patent literature cited in the description**

- **ENGLYST H ; KINGMAN S.M ; CUMMINGS J.H.** Classification and measurement of nutritionally important starch fractions. *Eur. J. Clin. Nutr.,* 1992, vol. 46, 33-50
- **SALMERON et al.** *JAMA,* 1997, vol. 277, 472-477
- **ENGLYST, H.N. et al.** *Eur. J. Clin. Nutr.,* 1992, vol. 46, 33-50
- **MINEKUS, M et al.** *Alt. Lab. Animals,* 1995, vol. 23, 197-209
- **VAN DER MAAREL et al.** *Biocat. Biotransform.,* 2003, vol. 21, 199-207
- **TAKATA H. et al.** *Appl. Environ. Microbiol.,* 1994, vol. 60, 3096-3104
- **ALTSCHUL et al.** *Nucl. Acids Res.,* 1997, vol. 25, 3389-3402
- **NEEDLEMAN ; WUNSCH.** *J. Mol. Biol.,* 1970, vol. 48, 443-453
- **WOOTEN ; FEDERHEN.** *Comput. Chem.,* 1993, vol. 17, 149-163
- **CLAVERIE ; STATES.** *Comput. Chem.,* 1993, vol. 17, 191-201
- **MEYERS ; MILLER.** *Computer Applic. Biol. Sci.,* 1988, vol. 4, 11-17
- **VAN DER MAAREL et al.** *J. Biotechnology,* 2002, vol. 94, 137-155
- **LEEMHUIS et al.** *Biochemistry,* 2004, vol. 43, 13204-13213
- **KRALJ et al.** *Biochemistry,* 2005, vol. 44, 9206-9216
- **J. FITTER.** Structural and dynamical features contributing to thermostability in alpha-amylases. *Cell Mol Life Sci,* 2005, vol. 62, 1925-1937

- **KIM YW et al.** Directed evolution of Thermus maltogenic amylase toward enhanced thermal resistance. *Appl. Environ. Microbiol.,* 2003, vol. 69, 4866-4874
- **J.L. DOUBLIER.** Rheological studies on starch. Flow behaviour of wheat starch pastes. *Starch/Stärke,* 1981, vol. 33, 415-420
- **P. DE MEUTER ; J. AMELRIJCKX ; H. RAHIER ; B. VAN MELE.** Isothermal crystallization of concentrated amorphous starch systems measured by modulated differential scanning calorimetry. *J. Polym. Sci.: Part B: Polym. Phys.,* 1999, vol. 37, 2881-2891
- **C. MERCIER ; P. FEILLET.** Modification of carbohydrate components by extrusion-cooking of cereal products. *Cereal Chem,* 1975, vol. 52, 283-297
- **R.J. NICHOLLS ; I.A.M. APPELQVIST ; A.P. DAVIES ; S.J. INGMAN ; P.J. LILLFORD.** Glass transition and the fracture behaviour of gluten and starches within the glassy state. *J. Cereal Sci,* 1995, vol. 21, 25-36
- **P. COLONNA ; J.L. DOUBLIER ; J.P. MELCION ; F. DE MONREDON ; C. MERCIER.** Extrusion cooking and drum drying of wheat starch. I. Physical and macromolecular modifications. *Cereal Chem,* 1984, vol. 61, 538-543
- **VAN DER MAAREL et al.** *Biocatalysis and Biotransformation,* 2003, vol. 21, 199-207
- Analysis of sugars found in glycoproteins. **G. SPIRO.** Methods Enzymol. Academic Press, 1966, vol. 8
- **ENGLYST, H. N ; KINGMAN, S. M ; J. H. CUMMINGS.** Classification and measurement of nutritionally important starch fractions. *Eur. J. Clin. Nutr.,* 1992, vol. 46, 33-50